# EUROPEAN PATENT SPECIFICATION

(11) **EP 1 925 245 B1**
(45) Date of publication and mention of the grant of the patent: **05.01.2011**
(21) Application number: 06425792.6
(22) Date of filing: 21.11.2006
(51) Int. Cl.: A47J 47/00, A22C 17/00

(54) **Improved work shelf and method for assembling the same**
Verbessertes Arbeitsboard und Montageverfahren dafür
Tablette de travail améliorée et son procédé d'assemblage

(43) Date of publication of application: 28.05.2008
(73) Proprietor: Eurocoltellerie S.r.l., 20100 Milano (IT)
(72) Inventor: Narducci, Michele, 20043 Arcore (Milano) (IT); Ferraro, Antonio, 20132 Milano (IT)
(74) Representative: Bottero, Claudio

(56) References cited:
- EP-A- 1 132 034
- DE-U1-202004 006 931
- FR-A- 2 558 708
- FR-A1- 2 808 668
- US-A- 3 127 128

## Description

The present invention refers, in the main aspects thereof, to a work shelf for processing and/or cutting food products of the type comprising a work surface on which the aforementioned products are processed and/or cut, and to a method for assembling the same.

In the field of treatment, preparation, packaging before sale of food products such as for example meat, fish, cheese, vegetables, salami and sausages in general, etc., there is the basic need that all processing operations of such products, including, among others, the preparation, transformation (including butchery in the case of meat), manufacture, packaging, handling and sale, take place in hygienic and sanitary conditions suitable for ensuring the integrity and healthiness of the products. Such hygienic and sanitary conditions are set by rigid field regulations which regulate the aforementioned operations.

To ensure that the necessary hygienic and sanitary conditions are maintained, the work surfaces on which the processing operations, and above all, the cutting of the food products are carried out must be periodically subjected to accurate cleaning treatments, and possible disinfection to substantially eliminate residues from previous processing and prevent contamination. To meet this need, work shelves have been developed in which the work surface is defined by a slab, typically made of a suitable plastic material, removably associable with a support base. A work shelf of this type is for example disclosed in patent application EP 1 132 034 A1. The possibility of removing the slab defining the work surface makes the cleaning treatments of the latter easier and faster, in addition to allowing the substitution when it is overly worn.

In these known work shelves, the slab thickness is reduced (typically in the range of about 5-15 mm) for economical reasons and to reduce the material disposal after use. Due to the reduced thickness, the slab often has a not perfect planarity, either from the time of its manufacture, due to the inevitable working tolerances, or following the storage as spare part or yet after use, during which the slab can be deformed.

The not perfect planarity of the slab causes a double drawback. Firstly, undesired interstices are formed between the slab and the respective support base, in which pathogenic micro-organisms can settle and grow, thus nullifying the hygienic characteristics of the work shelf. Secondly, the processing operations of the food products, in particular those which require greater precision, such as for example the cutting, become increasingly difficult due to a not adequate planarity of the work surface and/or not adequate stability thereof, due to the irregular support of the slab with respect to the support base.

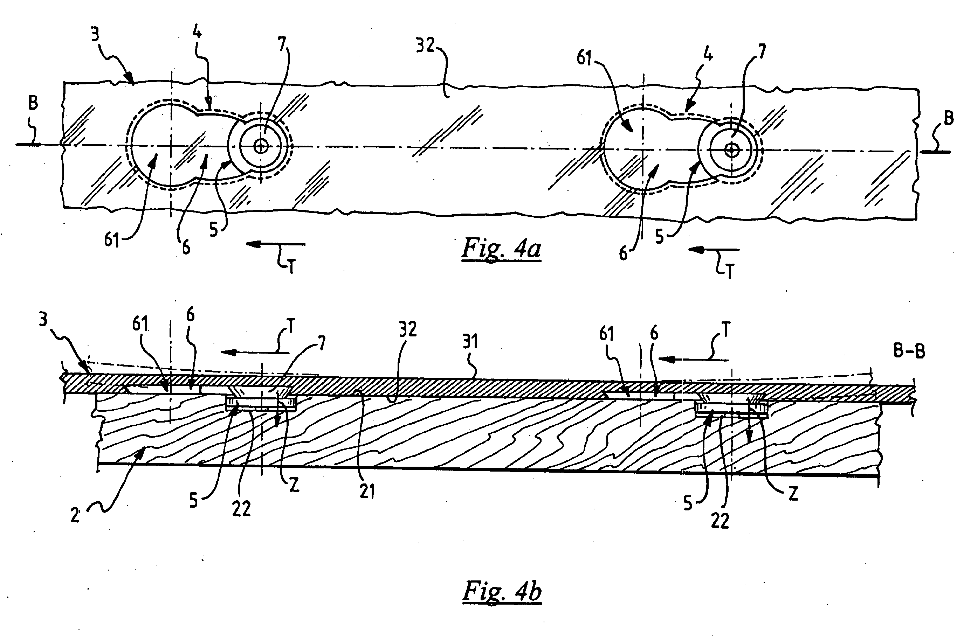

FR 2558708 discloses a multipurpose device comprising a support base and a slab removably associated to the support base. The slab can be used as working surface for cutting food. The support base is provided at its edges with a plurality of retaining assemblies each being adapted to engage a portion of the perimeter of the slab, as shown in figure 4. In particular each retaining assembly comprises an elastic bush projecting from the support base. By inserting the slab within all the retaining assemblies, the elastic bushes are deformed so as to accommodate the slab, which remains temporarily blocked by the friction and the springback of the elastic material of the retaining assemblies. Disengagement is achieved by pulling the slab from the support base so as to overcome the bias exerted by the retaining assemblies.

DE 20 2004 006931 U1 discloses a work shelf wherein a slab is coupled to the related support base by means of a single retaining assembly, i.e. a pin which engages a through hole of the slab and is screwed into a seat of the support base.

EP 1132034 discloses a work shelf wherein (fig. 1) the support base is provided with three lateral side edges against which corresponding sides of the slab are brought into abutment. The slab is locked against sliding away from the support base by mean of a pawl provided at the fourth side of the slab and moveable by means of a control handle. The technical problem underlying the invention is that of providing a work shelf having a slab of the type described above which can ensure conditions of substantial planarity of the slab once it has been associated with the respective support base, avoiding the occurrence of the above-stated drawbacks.

In a first aspect thereof, the present invention therefore regards a work shelf for processing and/or cutting food products as defined in claim 1.

In the work shelf of the invention, the retaining assemblies not only ensure a stable connection between slab and support base, but also, due to their specific arrangement, i.e. between the facing surfaces and at least at opposite edges thereof, can exert a traction on the slab towards the support base. Such traction, once the coupling between the two elements is obtained, causes a uniform contact of the slab with the support base. The formation of undesired interstices between support base and slab is therefore substantially avoided, while the work surface of the slab assumes and maintains during use a substantially planar configuration.

In a preferred embodiment of the work shelf of the invention, each assembly of said plurality of retaining assemblies comprises a retaining device provided in the support base and a respective retaining seat formed in the slab.

This embodiment is advantageous in the case where the retaining devices each form a group of cooperating parts to be mounted in the slab or in the support base, and for these devices, suitable housing seats must be provided in one of the two components. In this case, the support base, usually having a greater thickness with respect to the slab, offers greater possibilities of accommodation.

In an alternative embodiment of the work shelf of the invention, each retaining assembly of said plurality of retaining assemblies comprises a retaining device provided in the slab and a respective retaining seat formed in the support base.

This embodiment, which is the mirror image of the previous one, is advantageous when it is possible and economically convenient to make slabs comprising retaining devices formed integrally with them.

Further preferred characteristics according to the invention are defined in the attached claims 2-7, whose content is herein fully incorporated by reference.

According to further aspects thereof, the invention refers to a support base and a slab adapted to cooperate with each other to form the aforementioned work shelf, according to what is respectively defined in the attached claims 8 and 9, whose content is herein fully incorporated by reference.

In a further aspect thereof, the invention refers to a piece of furniture for processing and/or cutting and possibly displaying food products comprising at least one work shelf having the characteristics set forth above.

Preferred characteristics of such piece of furniture are defined in the attached claim 11, whose content is herein fully incorporated by reference.

In a further aspect thereof, the invention finally refers to a method for removably associating a slab defining a work surface for processing and/or cutting food products with a respective support base, as defined in claim 12.

By means of this method, it is possible to associate the slab defining the work surface with the support base so that the resulting work shelf for processing and/or cutting food products has all of the advantageous aspects mentioned above in terms of planarity of the work surface and absence of interstices between the slab and the support base.

Preferred characteristics of the method are defined in the attached claim 13, whose content is herein fully incorporated by reference.

Further characteristics and advantages of the present invention will be clearer from the following description of some preferred embodiments thereof, made hereafter, for indicating and not limiting purposes, with reference to the attached drawings. In such drawings:
- Figure 1 is a schematic, exploded perspective view of a work shelf according to a first preferred embodiment of the invention;
- Figure 2 is a schematic, exploded and partially sectional perspective view of a retaining assembly of the work shelf of figure 1;
- Figure 3a is a schematic, partial bottom view of details of the slab of the work shelf of figure 1 with two retaining assemblies in a non-operative configuration;
- Figure 3b is a schematic, partial cross-sectional view along the line A-A of figure 3a of the details shown in such figure, in which a corresponding portion of the support base is also shown;
- Figure 4a is a schematic, partial bottom view of details of the slab of the work shelf of figure 1 with two retaining assemblies in an operative configuration;
- Figure 4b is a schematic partial cross-sectional view along the line B-B of figure 4a of the details shown in such figure, in which a corresponding portion of the support base is also shown;
- Figures 5 and 6 are schematic cross-sectional views in enlarged scale of details of the work shelf shown in figure 3b and 4b, respectively;
- Figure 7 is a schematic, exploded perspective view of a work shelf according to an embodiment not part of the invention as claimed;
- Figure 8 is a schematic cross-sectional view along the C-C line of figure 7 of a detail of the work shelf shown in such figure.

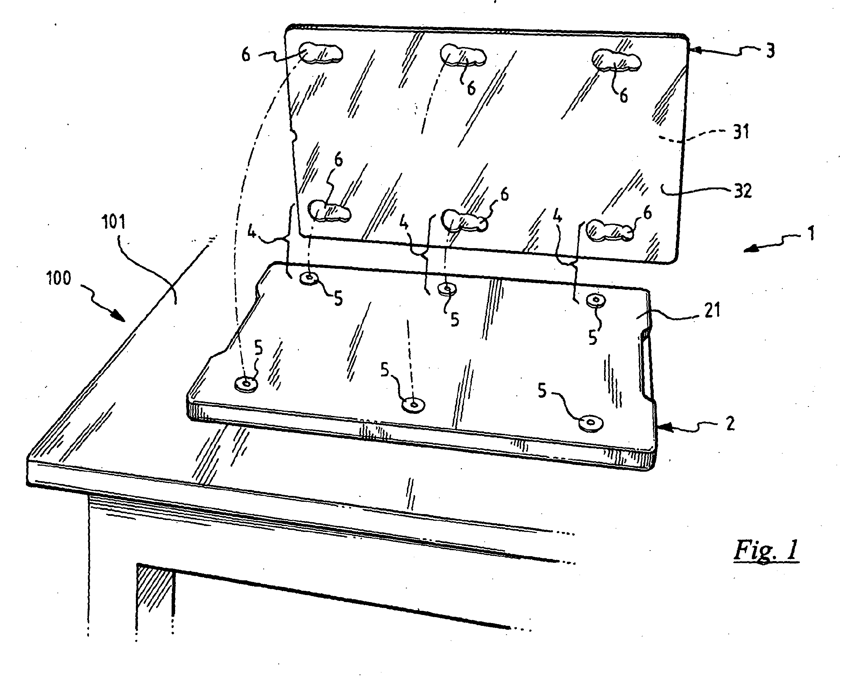

In figure 1, with reference numeral 1 is globally indicated a first preferred embodiment of a work shelf for processing and/or cutting food products according to the invention.

In this embodiment, the work shelf 1 essentially consist of a chopping board associable with a support surface 101 of a piece of furniture 100, for example a table or a work counter, intended for processing and cutting food products. The piece of furniture piece 100 is *per se* fully conventional and is only schematically illustrated here.

The chopping board essentially comprises a support base 2, made in a suitable structural material such as for example plastic, wood and the like, to which a slab 3 is removably associated whose upper face defines a work surface 31 for processing and/or cutting food products.

The base 2, according to the dimensions and/or use needs of the chopping board 1, can be simply supported on the support surface 101 of the piece of furniture 100, can be fixed in a removable manner to it by means of screws or other analogous fixing means, or it can form an integral part of it.

Preferably, the slab 3 is made in a suitable plastic material, for example polyethylene, compatible with foodstuff and suitable, if maintained in a good state and subjected to regular maintenance, to minimise the risks of contamination of the same foods.

Preferably, the slab 3 has a thickness in the range from about 5 to about 15 mm, suitable for ensuring a sufficient durability without negatively affecting the production costs or the amount of plastic material for disposal once the plate has to be substituted.

The connection between base 2 and slab 3 is ensured by a plurality of retaining assemblies 4 (of which only a few are indicated in figure 1), operatively interposed between facing surfaces, respectively indicated with 21 and 32, of the base 2 and the slab 3 and arranged at least in proximity to opposite edges of such surfaces. The retaining assemblies 4 so provided advantageously allow to maintain the slab 3 in contact with the base 2 such that undesired interstices are not formed between the two elements and the slab 3 is maintained in conditions of substantial planarity during use.

The total number and exact placement of the retaining assemblies 4 in specific embodiments of the chopping board 1 can be chosen by a man skilled in the art depending on the size and form of the chopping board, so as to ensure the desired substantial planarity of the slab 3 and substantial lack of interstices between said slab and the base 2 when they are associated with each other.

Preferably, the chopping board 1 has a quadrilateral form, more preferably rectangular, and the retaining assemblies 4 are arranged at least at corner zones of the respective facing surfaces 21 and 32. This arrangement, in the case of quadrangular chopping boards, advantageously allows to obtain the advantageous effects mentioned above with a minimum expenditure on retaining assemblies 4.

In alternative embodiments, not illustrated, the chopping board 1 can however take on different forms, for example a circular or elliptical form. In this case, at least four retaining assemblies 4 are preferably arranged in proximity to the edges of the surfaces 21 and 32 and in diametrically or axially opposed positions.

For a same form, if the size of the chopping board 1 increases also the number of employed retaining assemblies 4 increases. The further retaining assemblies 4 are preferably still arranged in proximity to the edges, for example at mid-points of the opposite longer sides in the case of a rectangular form (figure 1), but if necessary to ensure adequate planarity of the slab 3, also at zones inside the edges.

In a first preferred embodiment of the chopping board 1 (figures 1-6), each retaining assembly 4 comprises a retaining device 5 provided in the base 2 and a respective retaining seat 6 formed in the slab 3.

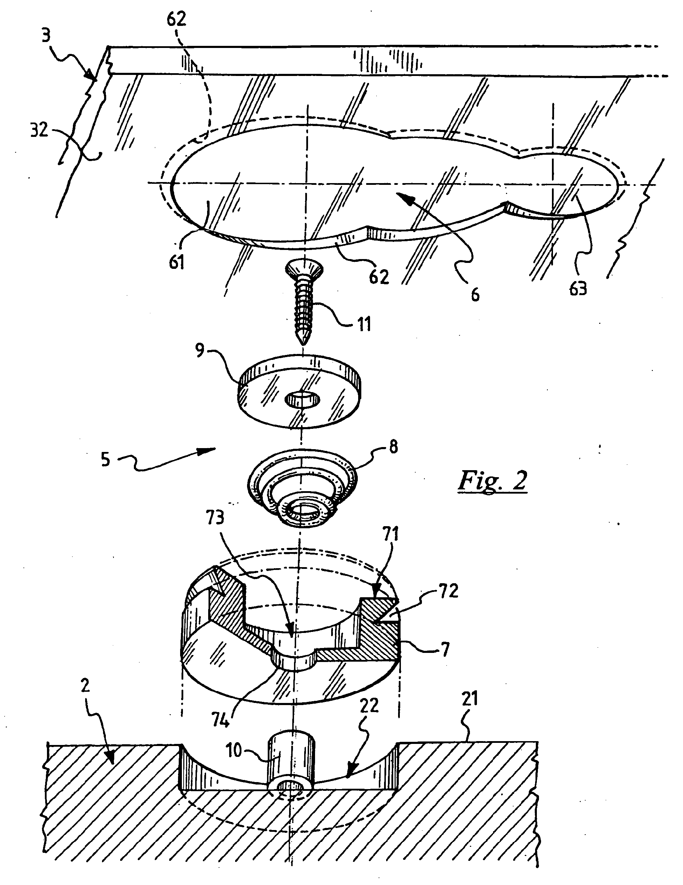

Figure 2 shows in detail a preferred embodiment of a retaining device 5 and the respective retaining seat 6 in this preferred embodiment of the chopping board 1.

The retaining device 5 comprises a movable locking element 7, composed for example of a ring nut having an end portion 71 projecting from the upper surface 21 of the base 2, and elastic means, for example in the form of a conical helical spring 8, active on the ring nut 7 to push it towards the base 2. Advantageously, this movable ring nut configuration of the locking element 7 facilitates the operations of application and removal of the slab 3. In fact, the mobility of the ring nut make it possible for the retaining device 5 to ensure a self-adapting coupling between slab 3 and base 2. Due to this type of coupling, possible non-planarity of the slab 3 can be compensated and the application or removal of the latter with respect to the base 2 can occur in any condition with minimum effort.

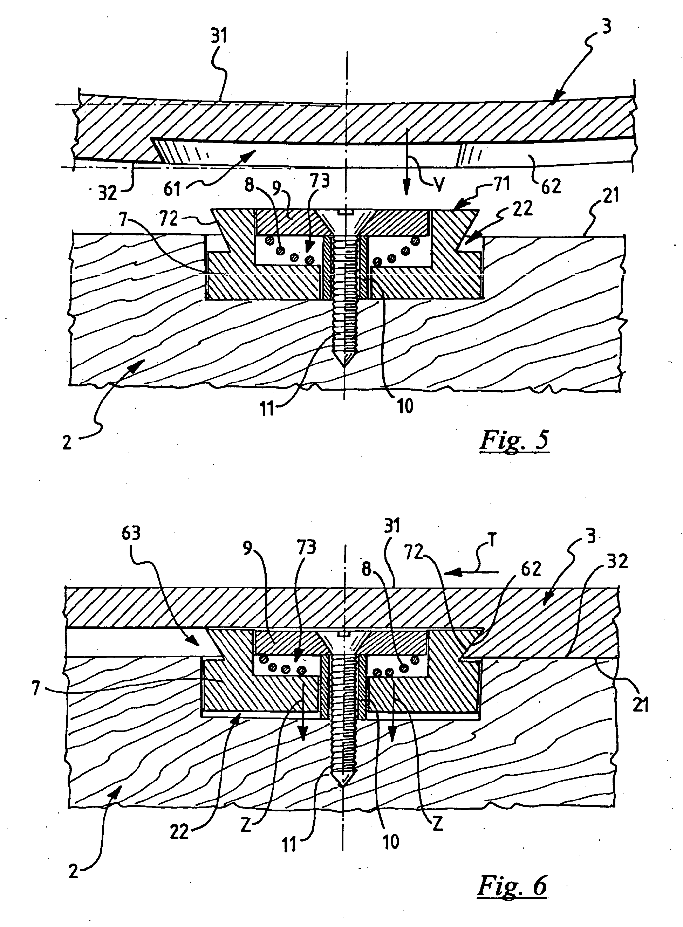

The spring 8 is preferably received in an open cylindrical cavity 73 formed in the ring nut 7 and is provided at its bottom with a through hole 74. The cavity 73 is closed at its upper part by means of a washer 9, having a diameter such to be able to be received in the same cavity 73. Such washer 9 preferably rests on a tubular spacer element 10 insertable in the hole 74. The height of the spacer element 10 is suitably chosen such that, in the assembled configuration (see figure 5), the washer 9 is received in the seat 73 so to lie flush on the upper part with the end portion 71 of the ring nut 7. A screw 11, or another equivalent fastening element, applied through the spacer element 10, allows the fastening of the retaining device 5 to the base 2.

As it can be better seen in figures 5 and 6, the retaining device is housed in a receiving seat 22 formed for the purpose in the base 2 and having a depth such to allow the end portion 71 to project with respect to the upper surface 21 of the base 2. In such figures, it is also clearly visible that, in the assembled configuration, the retaining device 5 described above comprises a fixed part, composed of the screw 11, the ring nut 9 and the spacer element 10, and a movable part, composed of the ring nut 7. The spring 8, active between the fixed washer 9 and the bottom of the cavity 73 in the ring nut 7, pushes the ring nut 7 towards the base 2 and opposes movements thereof away from the base 2, in particular determined by the engagement with the retaining seat 6 in the slab 3.

Preferably, the ring nut 7 comprises, at its end portion 71, a grooved portion 72 adapted to cooperate at least partially with a grooved profile 62, preferably with a conjugated shape, formed at perimeter walls of the retaining seat 6. The grooved profile 72 advantageously allows an optimal cooperation between each retaining device 5 and the respective retaining seat 6 with minimum bulk.

Preferably, each retaining seat 6 has a tapered form in the longitudinal direction. More preferably, each retaining seat 6 comprises a first portion defining an insertion zone 61, in which the projecting end portion 71 of the ring nut 7 can be freely received, and a second portion defining an engagement zone 63, at which said end portion 71 cooperates in abutment with the perimeter wall of the retaining seat, so to pull the slab 3 towards the base 2. Advantageously, this form of the retaining seats 6 contributes to ensuring an easy and quick application and removal of the slab 3.

The retaining seat 6 can be formed directly during the manufacture, typically by moulding, of the slab 3 or else formed in it by means of material removal after manufacture.

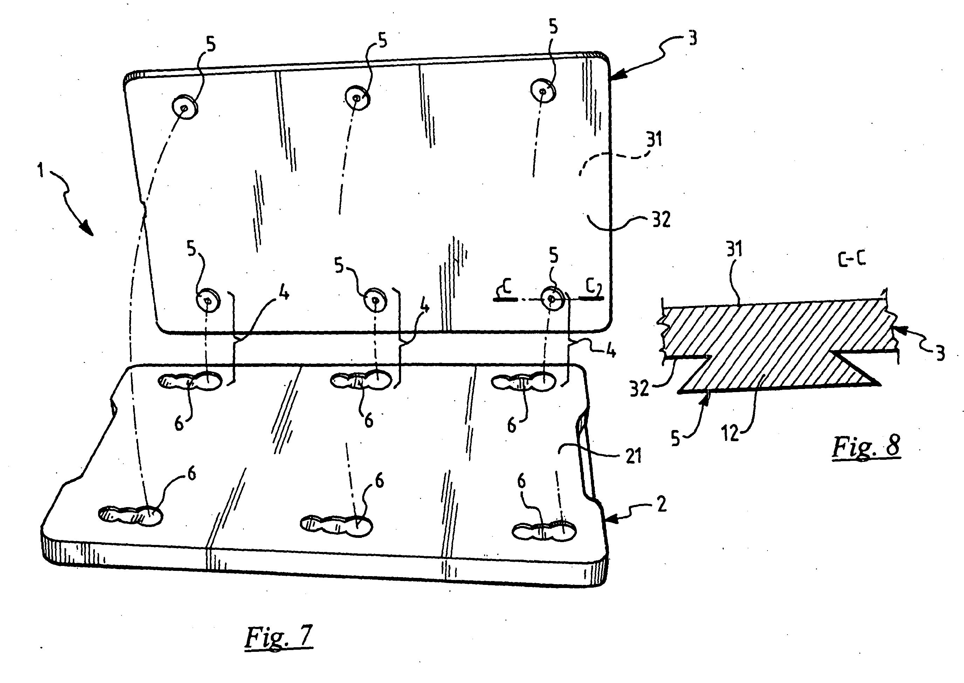

Figures 7 and 8 illustrate an embodiment which is not part of the invention as claimed. In this embodiment, each retaining assembly 4 comprises a retaining device provided in the slab 3 and a respective retaining seat 6 formed in the base 2.

In this embodiment, due to the limited thickness of the slab 3, it is preferred to employ fixed retaining devices 5, preferably formed integrally with the slab 3. For example (figure 8), the retaining devices can be composed of protuberances 12, whose lateral surfaces are appropriately shaped so to be engaged, also in this case, with grooved profiles at the lateral walls of the respective retaining seats 6.

The retaining seats 6 formed in the base 2 preferably have the same features set forth above with reference to the invention.

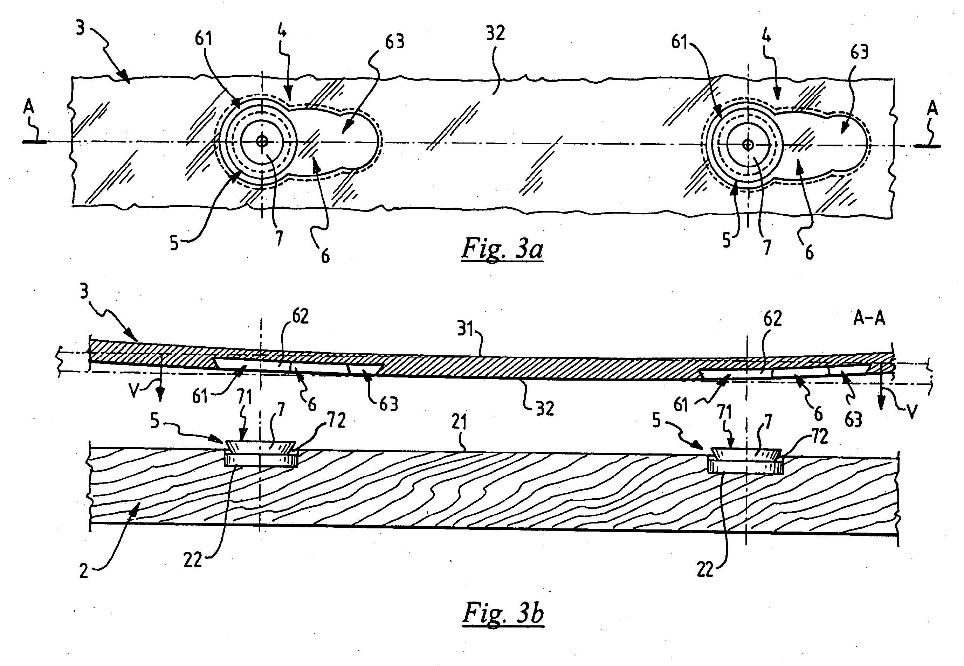

With reference to figures 3-6, a preferred embodiment of the method of the invention will now be described for removably associating the slab 3 defining the work surface 31 for processing and/or cutting food products with the respective support base 2, to form the chopping board 1.

In a first step of the method, a plurality of retaining devices 5 are provided at least at opposite edges of one of the upper surface 21 of the support base 2 and the surface 32 opposite the support surface 31 of the slab 3 (depending on which of the two embodiments of the chopping board 1 described above is chosen), such that the retaining devices 5 have the end portion 71 of the respective ring nut 7 projecting with respect to the aforesaid surfaces 21 or 32.

In a second step of the method, a corresponding plurality of retaining seats 6 is provided, adapted to cooperate with the retaining devices 5, at least at opposite edges of the other of said upper surface 21 of the support base 2 or said surface 32 opposite the work surface 31 of the slab 3.

In particular, in the preferred embodiments illustrated above wherein the chopping board 1 has a rectangular form, the retaining devices 5 and the respective retaining seats 6 are provided at the corners and at the mid-points of the opposite longer sides.

The subsequent steps of the method, related to the application of the slab 3 to the base 2, will for the sake of simplicity be described by making specific reference to the embodiment of the chopping board 1 in which the retaining devices 5 are provided in the base 2 and the retaining seats 6 are formed in the slab 3, as shown in figures 3-6. Such steps can in any case be applied in substantially analogous manner also to the embodiment of the chopping board 1 in which the arrangement of the retaining devices 5 and respective retaining seats 6 is reversed.

For applying the slab to the base, the method of the invention then provides for a further step in which the slab 3 and the base 2 are brought into a non-operative position, in which the retaining devices 5 are freely inserted in the respective retaining seats 6.

As schematically indicated by arrows V in figures 3b and 5, such step is preferably actuated by vertically resting the slab 3 on the base 2 such that each projecting end portion 71 of the ring nuts 7 is found at the insertion zone 61 of the respective retaining seat 6 (figure 3a).

In a subsequent step, the slab 3 and the base 2 are brought into an operative position in which the retaining devices 5 engage the respective retaining seats 6 in order to maintain the slab 3 in contact with the base 2 in conditions of substantial planarity.

As schematically indicated by arrows T in figures 4a, 4b and 6, such step is preferably actuated by means of a relative sliding of the slab 3 with respect to the base 2, so to bring each projecting end portion 71 of the ring nuts 7 into the engagement zone 63 of the respective retaining seat 6 (figure 4a), where the grooved profile 72 of each ring nut 7 stably cooperates in abutment with the grooved profile 62 at the perimeter wall of the respective retaining seat 6.

In the operative position, the slab 3, in addition to being firmly associated with the base 2, is pulled towards it so to adhere to it in conditions of substantial planarity and with the absence of interstices or slots between the slab 3 and the base 2.

In the preferred embodiment illustrated in the figures, the ring nuts 7 are movable and the method of the invention moreover provides for a step of applying an elastic force on the ring nuts 7 adapted to push them towards the base 2 (as shown by arrows Z in figures 4b and 6), and therefore to pull the slab 3 towards the base 2 when they are in the operative configuration.

As explained above, this advantageously allows a self-adaptation of the retaining devices 5 at the time of the application or removal of the slab 3, such that these operations can be carried out with minimum effort, even in the case of a not perfect planarity of the slab 3 (see figures 3b, 4b and 5), without compromising the traction of the slab 3 towards the base 2 necessary in the operative configuration, for attaining the desired conditions of substantial planarity.

The removal of the slab 3 from the base 2 occurs in a simple manner by operating in reverse sense with respect to that described for the application, i.e. by first moving the slab 3 with respect to the base 2 in the direction opposite to arrows T, until it is brought into the non-operative configuration, and subsequently by raising the slab 3 from the base 2.

Obviously, a man skilled in the art may introduce variants and modifications in the work shelf and method described above, in order to satisfy specific and contingent requirements, which variants and modifications fall anyhow within the scope of protection as is defined by the appended claims.

## Claims

1. Work shelf (1) for processing and/or cutting food products comprising a slab (3) defining a work surface (31) for processing and/or cutting food products, and a respective support base (2) to which said slab (3) is removably associated, and comprising a plurality of retaining assemblies (4) operatively interposed between facing surfaces (21, 32) of said support base (2) and said slab (3) and arranged at least in proximity to opposite edges of said facing surfaces (21,32), said retaining assemblies (4) being adapted to maintain said slab (3) in contact with said support base (2), in conditions of substantial planarity, wherein each assembly of said plurality of retaining assemblies (4) comprises a retaining device (5) provided in the support base (2) and a respective retaining seat (6) formed in the slab (3), or viceversa, **characterized in that** said retaining device (5) comprises a movable locking element (7) having an end portion (71) projecting from said support base (2) or from said slab (3), and elastic means (8) acting on said locking element (7) to push said locking element (7) towards said support base (2) or toward said slab (3), respectively.

2. Work shelf (1) according to claim 1, wherein said locking element (7) is perimetrically provided, at said projecting end portion (71), with a grooved profile (72) adapted to at least partially cooperate with a grooved profile (62) formed at perimeter walls of said retaining seat (6).

3. Work shelf (1) according to any one of the claims 1 or 2, wherein said retaining seat (6) has a substantially tapered shape in the longitudinal direction.

4. Work shelf (1) according to claim 3, wherein said retaining seat (6) has a first portion defining an insertion zone (61), in which said projecting end portion (71) of the locking element (7) can be freely received, and a second portion defining an engagement zone (63) at which said projecting end portion (71) cooperates in abutment with the perimeter wall of the retaining seat (6) to pull the slab (3) towards the support base (2).

5. Work shelf (1) according to any one of the preceding claims, wherein said support base (2) and said slab (3) have a quadrilateral shape and said retaining assemblies (4) are arranged at least at corner portions of said facing surfaces (21,32) of the support base (2) and the slab (3).

6. Work shelf (1) according to any one of the preceding claims, wherein said slab (3) is made of a suitable plastic material compatible with food products.

7. Work shelf (1) according to any one of the preceding claims, wherein said slab (3) has a thickness in the range of about 5-15 mm.

8. Support base (2) of a work shelf (1) as claimed in claim 1, comprising, at an upper surface thereof (21) and at least in proximity to opposite edges thereof, a plurality of retaining devices (5), each comprising a locking element (7) having an end portion (71) projecting from said upper surface (21), said retaining devices (5) being adapted to cooperate with a corresponding plurality of retaining seats (6) formed in a facing surface (32) of a slab (3) of said work shelf (1), defining a work surface (31) for processing and/or cutting food products, and removably associable with said support base (2),
**characterized in that**
said locking element (7) is movable and the respective retaining device (5) comprises elastic means (8) acting on said locking element (7) to push said locking element (7) towards the support base (2).

9. Slab (3) for use in a work shelf (1) as claimed in claim 1, said slab (3) defining a work surface (31) for processing and/or cutting food products, wherein it comprises, at a surface (32) opposite said work surface (31) and at least in proximity to opposite edges thereof, a plurality of retaining devices (5) projecting from said opposite surface (32) and adapted to cooperate with a corresponding plurality of retaining seats (6) of a support base (2) of said work shelf (1) removably associable with said slab (3), **characterized in that** each of said retaining device (5) comprises a movable locking element (7) having an end portion (71) projecting from said opposite surface (32) and elastic means (8) acting on said locking element (7) to push said locking element (7) towards said opposite surface (32).

10. Piece of furniture (100) for processing and/or cutting and possibly displaying food products comprising at least one work shelf (1) according to any one of claims 1-7.

11. Piece of furniture (100) according to claim 10, wherein said support base (2) consists of a portion of a support surface (101) of said piece of furniture (100).

12. Method for removably associating a slab (3) defining a work surface (31) for processing and/or cutting food products with a respective support base (2), comprising the steps of:
a) providing a plurality of retaining devices (5) at least at opposite edges of one of an upper surface (21) of the support base (2) and a surface (32) of said slab (3) opposite said work surface (31), said retaining devices (5) having an end portion (71) projecting with respect to said upper surface (21) or to said opposite surface (32);
b) providing a corresponding plurality of retaining seats (6) at least at opposite edges of the other of said upper surface (21) of the support base (2) and said surface (32) opposite said work surface (31) of said slab (3), said retaining seats (6) being adapted to cooperate with said retaining devices (5);
c) bringing said slab (3) and said support base (2) into a non-operative position in which said retaining devices (5) are freely inserted in said retaining seats (6);
d) bringing said slab (3) and said support base (2) into an operative position in which said retaining devices (5) engage said retaining seats (6) to maintain said slab (3) in contact with said support base (2) in conditions of substantial planarity,
**characterized by** said retaining devices (5) comprising respective movable locking elements (7) adapted to be engaged in said retaining seats (6), and by the step:
e) applying an elastic force to said locking elements (7) in order to pull said slab (3) towards said support base (2) in said operative configuration.

13. Method according to claim 12, wherein said step d) is carried out by means of relative sliding of the slab (3) with respect to the support base (2).

## Patentansprüche

1. Arbeitsplatte (1) zum Verarbeiten und/oder Schneiden von Nahrungsmittelprodukten, umfassend eine Platte (3), die eine Arbeitsfläche (31) zum Verarbeiten und/oder Schneiden von Nahrungsmittelprodukten definiert, und eine entsprechende Grundplatte (2), an die die Platte (3) lösbar befestigt ist, und umfassend eine Vielzahl von Befestigungsanordnungen (4), die wirksam zwischen den zugewandten Flächen (21, 32) der Grundplatte (2) und der Platte (3) eingefügt sind und wenigstens in der Nähe der gegenüberliegenden Kanten der zugewandten Flächen (21, 32) angeordnet sind, wobei die Befestigungsanordnungen (4) dafür geeignet sind, die Platte (3) in Kontakt mit der Grundplatte (2) zu halten unter der Bedingung einer substantiellen Ebenheit, worin jede Anordnung der Vielzahl von Befestigungsanordnungen (4) eine in der Grundplatte (2) bereitgestellte Haltevorrichtung (5) und einen in der Platte (3) geformten entsprechenden Haltesitz (6) umfasst, oder umgekehrt, **dadurch** charakterisiert, dass die Haltevorrichtung (5) ein bewegliches Feststellelement (7) mit einem aus der Grundplatte (2) oder aus der Platte (3) herausragenden End-Teil (71), und elastische Mittel (8) umfasst, die einen Schub des Feststellelements (7) zur Grundplatte (2) hin beziehungsweise zur Platte (3) hin bewirken.

2. Arbeitsplatte (1) nach Anspruch 1, worin das Feststellelement (7) an dem herausragenden End-Teil (71) mit einem Rillenprofil (72) umfangsseitig versehen ist, das dazu geeignet ist, wenigstens teilweise mit einem an der Umfangswand des Haltesitzes (6) geformten Rillenprofil (62) zusammenzuwirken.

3. Arbeitsplatte (1) nach einem der Ansprüche 1 oder 2, worin der Haltesitz (6) in Längsrichtung eine im Wesentlichen konische Form aufweist.

4. Arbeitsplatte (1) nach Anspruch 3, worin der Haltesitz (6) einen einen Einschubbereich (61) definierenden ersten Teil aufweist, von dem das herausragende End-Teil (71) des Feststellelements (7) ungehindert aufgenommen werden kann, und einen einen Bereich zum Einrasten (63) definierenden zweiten Teil aufweist, in dem das herausragende End-Teil (71) durch das Anstoßen an die Umlaufwand des Haltesitzes (6) bewirkt, dass die Platte (3) zu der Grundplatte (2) hingezogen wird.

5. Arbeitsplatte (1) nach einem der vorhergehenden Ansprüche, worin die Grundplatte (2) und die Platte (3) eine viereckige Form aufweisen und die Befestigungsanordnungen (4) wenigstens an den Eckteilen der zugewandten Flächen der Grundplatte (2) und der Platte (3) angeordnet sind.

6. Arbeitsplatte (1) nach einem der vorhergehenden Ansprüche, worin die Platte (3) aus einem geeigneten Kunststoffmaterial hergestellt ist, das mit Nahrungsmittelprodukten verträglich ist.

7. Arbeitsplatte (1) nach einem der vorhergehenden Ansprüche, worin die Platte (3) eine Dicke im Bereich von ungefähr 5-15 mm aufweist.

8. Grundplatte (2) einer Arbeitsplatte (1), wie sie in Anspruch 1 beansprucht ist, umfassend an einer Oberseite (21) davon und wenigstens in der Nähe ihrer gegenüberliegenden Kanten eine Vielzahl von Haltevorrichtungen (5), wobei jede ein Feststellelement (7) mit einem aus der Oberfläche (21) herausragenden End-Teil (71) umfasst, wobei die Haltevorrichtungen (5) geeignet sind, mit einer entsprechenden Vielzahl von in einer zugewandten Fläche (32) einer Platte (3) der Arbeitsplatte (1) gebildeten Haltesitzen (6) zusammenzuwirken, wobei sie eine Arbeitsfläche (31) zum Verarbeiten und/oder Schneiden von Nahrungsmittelprodukten definiert, und mit der Grundplatte (2) lösbar verbunden ist, **dadurch gekennzeichnet, dass**
das Feststellelement (7) beweglich ist und die entsprechende Haltevorrichtung (5) elastische Mittel (8) umfasst, die einen Schub des Feststellelements (7) zur Grundplatte (2) hin bewirken.

9. Platte (3) zur Verwendung in einer Arbeitsplatte (1), wie sie in Anspruch 1 beansprucht ist, wobei die Platte (3) eine Arbeitsfläche (31) zum Verarbeiten und/oder Schneiden von Nahrungsmittelprodukten definiert, worin sie an einer der Arbeitsfläche (31) gegenüberliegenden Fläche (32) und wenigstens in der Nähe ihrer gegenüberliegenden Kanten eine Vielzahl von Haltevorrichtungen (5) umfasst, die aus der gegenüberliegenden Fläche (32) herausragen und geeignet sind, mit einer entsprechenden Vielzahl von Haltesitzen (6) einer Grundplatte (2) der Arbeitsplatte (1) zusammenzuwirken, die lösbar mit der Platte (3) verbunden ist, **dadurch gekennzeichnet, dass** jede Haltevorrichtung (5) ein bewegliches Feststellelement (7) mit einem aus der gegenüberliegenden Fläche (32) herausragenden End-Teil (71) und elastische Mittel (8) umfasst, die einen Schub des Feststellelements (7) zur gegenüberliegenden Fläche (32) hin bewirken.

10. Möbelstück (100) zum Verarbeiten und/oder Schneiden und eventuellem Auslegen von Nahrungsmittelprodukten, umfassend wenigstens eine Arbeitsplatte (1) nach einem der Ansprüche 1-7.

11. Möbelstück (100) nach Anspruch 10, worin die Grundplatte (2) aus einem Teil einer Auflagefläche (101) des Möbelstücks (100) besteht.

12. Verfahren zum lösbaren Verbinden einer Platte (3), die eine Arbeitsfläche (31) zum Verarbeiten und/oder Schneiden von Nahrungsmittelprodukten definiert, mit einer entsprechenden Grundplatte (2), umfassend die Schritte des:
a) Bereitstellens einer Vielzahl von Haltevorrichtungen (5) wenigstens an gegenüberliegenden Kanten entweder einer Oberfläche (21) der Grundplatte (2) oder einer der Arbeitsfläche (31) der Platte (3) gegenüberliegenden Fläche (32), wobei die Haltevorrichtungen (5) einen in Bezug auf die Oberfläche (21) oder in Bezug auf die gegenüberliegende Fläche (32) herausragenden End-Teil (71) aufweisen;
b) Bereitstellens einer entsprechenden Vielzahl an Haltesitzen (6) wenigstens an gegenüberliegenden Kanten von jeweils der anderen der Oberfläche (21) der Grundplatte (2) und der der Arbeitsfläche (31) gegenüberliegenden Fläche (32) der Platte (3), wobei die Haltesitze (6) zum Zusammenwirken mit den Haltevorrichtungen (5) geeignet sind;
c) Positionieren der Platte (3) und der Grundplatte (2) in eine nicht funktionsfähige Lage, in der die Haltevorrichtungen (5) ungehindert in die Haltesitze (6) eingeschoben sind;
d) Positionieren der Platte (3) und der Grundplatte (2) in eine funktionsfähige Lage, in der die Haltevorrichtungen (5) in die Haltesitze (6) einrasten, um die Platte (3) in Kontakt mit der Grundplatte (2) unter der Bedingung einer substantiellen Ebenheit zu halten,
**dadurch gekennzeichnet, dass** die Haltevorrichtungen (5) entsprechend bewegliche Feststellelemente (7) umfassen, die zum Einrasten in die Haltesitze (6) geeignet sind, und durch den Schritt des
e) Anwendens einer elastischen Kraft auf die Feststellelemente (7), um in Betriebsanordnung die Platte (3) zu der Grundplatte (2) zu ziehen.

13. Verfahren nach Anspruch 12, worin Schritt d) mittels relativem Gleiten der Platte (3) bezüglich der Grundplatte (2) ausgeführt wird.

## Revendications

1. Tablette de travail (1) permettant de traiter et/ou de découper des produits alimentaires, comprenant une plaque (3) définissant une surface de travail (31) permettant de traiter et/ou de découper des produits alimentaires, ainsi qu'une base de support respective (2) à laquelle ladite plaque (3) est associée de manière amovible, comprenant une pluralité d'ensembles de retenue (4) fonctionnellement intercalés entre des surfaces en regard (21, 32) de ladite base de support (2) et de ladite plaque (3) et disposés au moins à proximité de bords opposés desdites surfaces en regard (21, 32), lesdits ensembles de retenue (4) étant conçus pour maintenir ladite plaque (3) en contact avec ladite base de support (2) dans des conditions de quasi-planéité, dans laquelle chaque ensemble de ladite pluralité d'ensembles de retenue (4) comprend un dispositif de retenue (5) situé dans la base de support (2) et un siège de retenue respectif (6) formé dans la plaque (3), ou vice versa, et **caractérisée en ce que** ledit dispositif de retenue (5) comprend un élément de verrouillage mobile (7) ayant une partie d'extrémité (71) faisant saillie par rapport à ladite base de support (2) ou à ladite plaque (3), ainsi que des moyens élastiques (8) agissant sur ledit élément de verrouillage (7) de manière à pousser respectivement ledit élément de verrouillage (7) vers ladite base de support (2) ou vers ladite plaque (3).

2. Tablette de travail (1) selon la revendication 1, **caractérisée en ce que** ledit élément de verrouillage (7) présente sur son périmètre, au niveau de ladite partie d'extrémité faisant saillie (71), un profil rainuré (72) conçu pour coopérer au moins partiellement avec un profil rainuré (62) formé au niveau des parois du périmètre dudit siège de retenue (6).

3. Tablette de travail (1) selon l'une quelconque des revendications 1 ou 2, **caractérisée en ce que** ledit siège de retenue (6) a une forme sensiblement conique dans la direction longitudinale.

4. Tablette de travail (1) selon la revendication 3, **caractérisée en ce que** ledit siège de retenue (6) comporte une première partie définissant une zone d'insertion (61), dans laquelle ladite partie d'extrémité faisant saillie (71) de l'élément de verrouillage (7) peut être reçue librement, et une seconde partie définissant une zone de mise en prise (63) au niveau de laquelle ladite partie d'extrémité faisant saillie (71) coopère en butée avec la paroi du périmètre du siège de retenue (6) de façon à tirer la plaque (3) vers la base de support (2).

5. Tablette de travail (1) selon l'une quelconque des précédentes revendications, **caractérisée en ce que** ladite base de support (2) et ladite plaque (3) ont une forme de quadrilatère et lesdits ensembles de retenue (4) sont disposés au moins au niveau des parties d'angle desdites surfaces en regard (21, 32) de la base de support (2) et de la plaque (3).

6. Tablette de travail (1) selon l'une quelconque des précédentes revendications, **caractérisée en ce que** ladite plaque (3) est fabriquée en une matière plastique appropriée, compatible avec des produits alimentaires.

7. Tablette de travail (1) selon l'une quelconque des précédentes revendications, **caractérisée en ce que** ladite plaque (3) a une épaisseur de l'ordre d'environ 5 à 15 mm.

8. Base de support (2) d'une tablette de travail (1) selon la revendication 1, comprenant, au niveau d'une surface supérieure (21) de celle-ci et au moins à proximité de bords opposés de celle-ci, une pluralité de dispositifs de retenue (5) comprenant chacun un élément de verrouillage (7) ayant une partie d'extrémité (71) faisant saillie par rapport à ladite surface supérieure (21), lesdits dispositifs de retenue (5) étant conçus pour coopérer avec une pluralité correspondante de sièges de retenue (6) formés dans une surface en regard (32) d'une plaque (3) de ladite tablette de travail (1), définissant une surface de travail (31) permettant de traiter et/ou de découper des produits alimentaires et pouvant être associée de manière amovible à ladite base de support (2), **caractérisée en ce que**
ledit élément de verrouillage (7) est mobile et le dispositif de retenue respectif (5) comprend des moyens élastiques (8) agissant sur ledit élément de verrouillage (7) de manière à pousser ledit élément de verrouillage (7) vers la base de support (2).

9. Plaque (3) destinée à une utilisation dans une tablette de travail (1) selon la revendication 1, ladite plaque (3) définissant une surface de travail (31) permettant de traiter et/ou de découper des produits alimentaires, dans laquelle, au niveau d'une surface (32) à l'opposé de ladite surface de travail (31) et au moins à proximité de bords opposés de celle-ci, une pluralité de dispositifs de retenue (5) faisant saillie par rapport à ladite surface opposée (32) et étant conçus pour coopérer avec une pluralité correspondante de sièges de retenue (6) d'une base de support (2) de ladite tablette de travail (1) pouvant être associée de manière amovible à ladite plaque (3), et **caractérisée en ce que** chacun desdits dispositifs de retenue (5) comprend un élément de verrouillage mobile (7) ayant une partie d'extrémité (71) faisant saillie par rapport à ladite surface opposée (32) et des moyens élastiques (8) agissant sur ledit élément de verrouillage (7) de façon à pousser ledit élément de verrouillage (7) vers ladite surface opposée (32).

10. Elément de mobilier (100) permettant de traiter et/ou de découper, et éventuellement de présenter, des produits alimentaires, comprenant au moins une tablette de travail (1) selon l'une quelconque des revendications 1 à 7.

11. Elément de mobilier (100) selon la revendication 10, **caractérisé en ce que** ladite base de support (2) se compose d'une partie d'une surface de support (101) dudit élément de mobilier (100).

12. Procédé permettant d'associer de manière amovible une plaque (3), définissant une surface de travail (31) permettant de traiter et/ou de découper des produits alimentaires, à une base de support respective (2), comprenant les étapes suivantes :
a) formation d'une pluralité de dispositifs de retenue (5) au niveau de bords opposés d'une surface supérieure (21) de la base de support (2) ou d'une surface (32) de ladite plaque (3) à l'opposé de ladite surface de travail (31), lesdits dispositifs de retenue (5) ayant une partie d'extrémité (71) faisant saillie par rapport à ladite surface supérieure (21) ou à ladite surface opposée (32) ;
b) formation d'une pluralité correspondante de sièges de retenue (6) au moins au niveau de bords opposés de l'autre surface parmi ladite surface supérieure (21) de la base de support (2) et ladite surface (32) à l'opposé de ladite surface de travail (31) de ladite plaque (3), lesdits sièges de retenue (6) étant conçus pour coopérer avec lesdits dispositifs de retenue (5) ;
c) placement de ladite plaque (3) et de ladite base de support (2) dans une position non fonctionnelle dans laquelle lesdits dispositifs de retenue (5) sont insérés librement dans lesdits sièges de retenue (6) ;
d) placement de ladite plaque (3) et de ladite base de support (2) dans une position fonctionnelle dans laquelle lesdits dispositifs de retenue (5) viennent en prise avec lesdits sièges de retenue (6) de façon à maintenir ladite plaque (3) en contact avec ladite base de support (2) dans des conditions de quasi-planéité,
**caractérisé en ce que** lesdits dispositifs de retenue (5) comprennent des éléments de verrouillage mobiles respectifs (7) conçus pour être mis en prise dans lesdits sièges de retenue (6), et **en ce qu'**il comprend l'étape suivante :
e) application d'une force élastique auxdits éléments de verrouillage (7) afin de tirer ladite plaque (3) vers ladite base de support (2) dans ladite configuration fonctionnelle.

13. Procédé selon la revendication 12, **caractérisé en ce que** ladite étape d) est mise en oeuvre par un glissement relatif de la plaque (3) par rapport à la base de support (2).
